Europäisches Patentamt

European Patent Office

Office européen des brevets

(19)

(11)  EP 0 726 666 B1

(12)    **FASCICULE DE BREVET EUROPEEN**

(45)  Date de publication et mention
de la délivrance du brevet:
**05.11.2003   Bulletin 2003/45**

(51)  Int Cl.⁷:  **H04L 12/46**

(21)  Numéro de dépôt: **95402935.1**

(22)  Date de dépôt: **22.12.1995**

(54)  **Dispositif d'interfaçage entre supports de communication dans un réseau de domotique**

Schnittstellenvorrichtung zwischen Haus-Netzwerkübertragungsmedien

Interface circuit between communication media in a home network

(84)  Etats contractants désignés:
**DE FR GB IT**

(30)  Priorité:  **10.01.1995  FR 9500207**

(43)  Date de publication de la demande:
**14.08.1996   Bulletin 1996/33**

(73)  Titulaire: **THOMSON multimedia**
**92648 Boulogne Cédex (FR)**

(72)  Inventeurs:
• **Randrianalimanana, Pax**
**F-92050 Paris la Defense (FR)**

• **Bürklin, Helmut**
**F-92050 Paris la Defense (FR)**

(74)  Mandataire: **Ruellan-Lemonnier, Brigitte et al**
**THOMSON multimedia,**
**46 quai A. Le Gallo**
**92648 Boulogne Cédex (FR)**

(56)  Documents cités:
**EP-A- 0 081 821          EP-A- 0 495 575**
**US-A- 4 638 298**

**Description**

L'invention concerne un dispositif d'interfaçage entre supports de communication dans un réseau de domotique. Elle concerne plus particulièrement un répéteur destiné à servir d'interface entre notamment deux cables coaxiaux, entre deux paires torsadées ou entre une paire torsadée et un cable coaxial.

Le document "Home Systems Specification - Release 1.1 - March 15, 1992" édité par la EHSA ("European Home Systems Association") préconise notamment deux types de dispositifs d'interconnexion de bus de communication différents: un premier dispositif appelé "router" et un second dispositif appelé répéteur. Le "router" est un appareil possédant des caractéristiques intéressantes, mais c'est aussi un appareil relativement complexe et coûteux.

La présente invention a pour but de proposer un procédé et un dispositif d'interconnexion ou d'interfaçage du type répéteur.

Un dispositif d'interconnexion de réseaux locaux à contention est décrit dans le document EP-A-0 081 821.

L'invention a pour objet un dispositif d'interfaçage entre au moins deux bus de communication, caractérisé en ce qu'il comprend

une interface à double sens pour chacun desdits bus de communication,

un circuit de comparaison de messages reçus sur lesdits interfaces,

un circuit de résolution de conflits de priorité entre des messages se chevauchant temporellement, ledit circuit de résolution de conflits autorisant la transmission, à travers le ou lesdits interfaces, du message prioritaire vers les bus de communication dont ledit message prioritaire n'est pas originaire.

Selon un mode de réalisation particulier, chaque interface à double sens est reliée à un circuit d'autorisation d'émission lui communicant un message à transmettre sur le bus auquel est connecté ledit interface sous l'action d'un signal d'autorisation en provenance du circuit de résolution de conflits de priorité.

Selon un mode de réalisation particulier, dispositif d'interfaçage est connecté à un premier bus de communication et à un second bus de communication.

Selon un mode de réalisation particulier, ledit circuit de résolution de conflit déterminent le délai entre le début de deux messages reçus sur les deux bus de communication.

Selon un mode de réalisation particulier, ledit délai est inférieur à la résolution temporelle dudit dispositif, alors dans un premier aucun signal d'autorisation de transmission n'est généré tant que les deux messages comportent la même information.

Selon un mode de réalisation particulier, le circuit de résolution de conflits crée pour chaque bit d'un message reçu une fenêtre de comparaison de durée inférieure à la période bit.

Selon un mode de réalisation particulier, lorsque ledit délai est inférieur à la durée de ladite fenêtre de comparaison, mais supérieur à la résolution temporelle du dispositif, priorité est donnée dans un premier temps au message ayant débuté en premier, un signal d'autorisation d'émission étant généré par le circuit de résolution de conflits et destiné au circuit d'autorisation d'émission associé au bus de communication dont n'est pas issu le message prioritaire.

Selon un mode de réalisation particulier, dès que les messages comportent des informations différentes, la priorité est donnée au message comportant un "0" logique, ledit circuit de résolution de conflit générant un signal d'autorisation de transmission destiné au circuit d'autorisation d'émission associé à celui des deux bus de communication dont le message prioritaire n'est pas issu.

Selon un mode de réalisation particulier, dès que les messages comportent des informations différentes, la priorité est donnée au message comportant l'information ayant priorité dans le protocole d'accès aux bus des appareils connectés à ces bus, ledit circuit de résolution de conflit générant un signal d'autorisation de transmission destiné au circuit d'autorisation d'émission associé à celui des deux bus de communication dont le message prioritaire n'est pas issu.

Selon un mode de réalisation particulier, lorsque ledit délai est supérieur à la durée de la fenêtre de comparaison, le message prioritaire est le message ayant débuté le premier, ledit circuit de résolution de conflit générant un signal d'autorisation de transmission destiné au circuit d'autorisation d'émission associé à celui des deux bus de communication dont le message prioritaire n'est pas issu.

Selon un mode de réalisation particulier, ledit message prioritaire est transmis en entier vers l'autre bus.

Selon un mode de réalisation particulier, lesdits interfaces sont des interfaces vers un bus coaxial ou un bus à paires torsadées.

Selon un mode de réalisation particulier, le dispositif comprend des moyens pour alimenter en énergie un des bus à partir d'un autre bus.

D'autres caractéristiques et avantages de l'invention apparaîtront à travers la description d'un exemple de réalisation particulier non limitatif, illustré par les figures parmi lesquelles:

- la figure 1 représente schématiquement un réseau de domotique mettant en oeuvre le dispositif conforme à un exemple de réalisation de l'invention,

- la figure 2 représente sous la forme d'un diagramme bloc le dispositif conforme au présent exemple de réalisation de l'invention,
- la figure 3 représente un diagramme bloc du bloc 3 de la figure 2 selon le présent exemple de réalisation,
- la figure 4 représente un schéma fonctionnel du bloc interface analogique 2 de la figure 2, selon le présent exemple de réalisation,
- la figure 5 représente un schéma logique du bloc de comparaison 5 de la figure 2, selon le présent exemple de réalisation,
- les figures 6a à 6h représentent des chronogrammes de divers signaux utilisés par le dispositif conforme au présent exemple de réalisation,
- les figures 7a à 7c représentent des chronogrammes de certains signaux du dispositif conforme au présent exemple de réalisation, dans le cas où un bit START d'un message sur un des bus est en avance sur un bit START d'un message sur l'autre bus,
- les figures 8a à 8c représentent des chronogrammes de certains signaux du dispositif conforme à l'invention, dans le cas de la détection de deux bits START dont l'un est en avance sur l'autre d'une durée maximale.

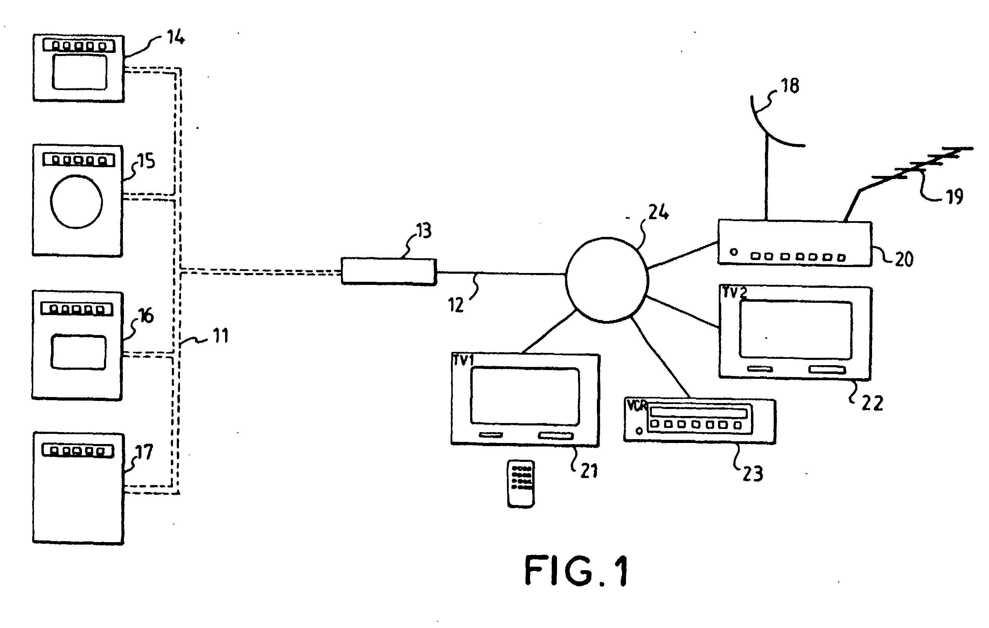

La figure 1 représente un réseau de domotique dans lequel est mis en oeuvre le dispositif conforme à l'invention. En soi, ce réseau est conforme à la spécification "Home Systems Release 1.1" encore appelée "spécification HS" dans ce qui suit et editée par la European Home Systems Association (EHSA).

Le réseau comporte un premier support ou bus de transmission 11 sous la forme de paires torsadées, et un second support ou bus de transmission 12 sous la forme de câbles coaxiaux connectés en une configuration dite d'"'étoile passive" ("Passive Star"). Les deux supports sont interconnectés au niveau du dispositif répéteur 13 conforme au présent exemple de l'invention.

Les caractéristiques physiques et électriques, ainsi que différentes configurations d'interconnexion des paires torsadées et des câbles coaxiaux utilisés dans le présent exemple de réalisation sont décrites de manière détaillé dans la spécification HS. Ce document décrit également le format de données utilisé pour la communication sur ces supports, ainsi que les protocoles de communication. On se limitera donc dans cette description aux détails nécessaires pour une description claire de l'invention.

La spécification HS décrit deux types différents de câbles de paires torsadées, référencées TP1 et TP2. Dans ce qui suit, on s'intéressera uniquement aux paires torsadées de type TP1, ceci dans le but de ne pas embrouiller le lecteur.

Le câble de la paire torsadée TP1 comprend en fait deux paires torsadées dans un même gaine. L'une de ces paires est utilisée pour la transmission de données, l'autre pour l'alimentation. Dans ce qui suit, on fera référence uniquement à la paire servant à la transmission de données utiles.

La paire torsadée TP1 transmet un signal à un débit de sensiblement 9,6 kBaud, codé suivant un code RZAMI (Return to Zero Alternate Mark Inversion) à logique négative. Les "0" logiques sont codés alternativement par un niveau de tension positif et négatif, les "1" logiques étant codés par un niveau de tension nul. On adjoint à chaque caractère transmis un bit de parité choisi pour obtenir une tension continue moyenne nulle par caractère.

Chaque caractère comprend un bit START, huit bits de données b0 à b7 (le bit b0 étant le bit de poids le plus faible), un bit de parité paire et un bit de stop. Les bits sont transmis dans cet ordre, comme illustré ci-dessus. Le bit START est toujours transmis avec une polarité positive.

| START | b0 | b1 | b2 | b3 | b4 | b5 | b6 | b7 | P | STOP |
|-------|----|----|----|----|----|----|----|----|----|------|

Le câble coaxial transmet des informations de contrôle ("Datagram service") aussi à un débit de 9,6 kBaud. Le signal correspondant est un signal bande de base. Les données sont également codées en code RZAMI, dans un format identique à TP1. Le câble coaxial transporte d'autres signaux sur d'autres bandes de fréquence.

A titre d'exemple, le bus TP1 est relié à un four à micro-ondes, un lave-linge 15, un four 16 et un lave-vaisselle 17. Le support de type TP1 est généralement destiné à un contrôle d'appareil. Le bus TP1 lui-même est configuré en "guirlande" (ou "daisy chain" en terminologie anglaise): il comporte un câble central sur lequel viennent se greffer les câbles allant vers les différents appareils, y compris le répéteur 13.

Le support coaxial est destiné plutôt à la transmission de signaux audio ou vidéo, codés et ou modulés de façon appropriée, la bande passante disponible étant plus large que sur les paires torsadées. Bien sûr, des données de contrôle circulent aussi sur ce bus. Les appareils connectés à ce bus sont à titre d'exemple un décodeur de signaux satellites 20 auquel sont connectées une antenne parabolique de réception 18 de signaux diffusés par satellites et une antenne terrestre 19, un ou plusieurs téléviseurs 21 et 22 et un magnétoscope 23. Le décodeur 20 est connecté au bus par l'intermédiaire de la sortie de son modulateur UHF. Le bus coaxial lui-même a selon le présent exemple une configuration dite "étoile passive". Cette configuration consiste en un séparateur central 24 multi-voies auquel sont connectés des extrémités de câbles coaxiaux dont l'autre extrémité est connectée aux appareils mentionnés ci-dessus. Un câble coaxial relie le séparateur 12 et le répéteur 13.

Le répéteur a pour fonction de rendre transparente la liaison paire torsadée - câble coaxial en ce qui concerne les données de contrôle au débit de 9,6 kBaud. Le répéteur a aussi pour fonction de gérer les collisions de données émises sur les bus qu'il connecte.

Il est bien évident qu'une telle fonction ne sera pas réalisée entre le bus TP1 et le bus coaxial pour des signaux de type vidéo d'une largeur de bande approchant les 6 MHz circulant sur le bus coaxial, étant donné la différence de bande passante disponible selon la spécification HS sur les deux supports. Dans le cadre du présent exemple, on s'intéressera uniquement au canal de données de contrôle ("Datagram service") à 9,6 kBaud.

Certains aspects du rôle d'un répéteur sont abordés dans la spécification HS notamment au paragraphe 7.1.3.1 de la partie "Architecture".

Les différents appareils connectés au réseau mettent en oeuvre un protocole d'accès au bus auquel ils sont connectés. Ce protocole porte le nom CSMA/CA ("Carrier Sense Multiple Access with Collision Avoidance" en terminologie anglaise) et est décrit plus en détail dans la spécification HS, partie TP1 paragraphe 3.5.i.a.

Ce protocole peut être résumé comme suit:

Un appareil surveille l'activité du réseau par l'intermédiaire du bus auquel il est connecté. S'il désire émettre un message, un temps minimum t0 devra s'être écoulé depuis la dernière activité enregistrée sur le support de transmission (ou un canal de ce support). Dans le cadre du présent exemple, ce temps t0 est égal à:

$$10 \text{ ms} + \text{deux périodes bits} = 12.290 \text{ ms}.$$

L'attribution d'un canal du support de transmission à un parmi plusieurs appareils est réalisé en comparant, au niveau de chaque appareil, les signaux transmis et les signaux reçus. Pendant qu'il transmet un "1" logique, un appareil tentera de détecter si un autre appareil transmet un "0". Dans le cas où deux appareil transmettent respectivement un "1" logique et un "0" logique, c'est le "0" logique qui l'emporte.

Lorsqu'une différence entre le signal émis et le signal reçu est détectée, les appareils émettant un "1" logique cessent d'émettre, tandis que l'appareil émettant un "0" continue son émission. Les autres appareils attendent la libération du support pour reprendre l'émission.

Ce comportement des appareils connectés de part et d'autre du répéteur sera mis à profit par ce dernier.

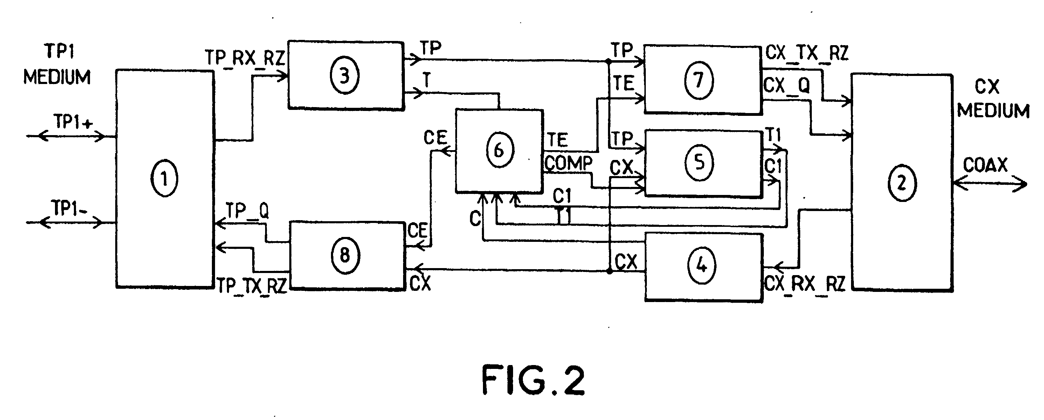

La figure 2 représente un diagramme bloc fonctionnel du répéteur conforme au présent exemple de réalisation. Les flèches représentent la circulation des signaux entre les différents blocs. Deux flèches de sens opposé sur une même ligne indiquent une circulation des signaux dans les deux sens.

De manière générale, les conventions suivantes sont utilisées:

TP désigne les paires torsadées ou les signaux y circulant,
CX désigne les câbles coaxiaux ou les signaux y circulant,
RX indique des signaux reçus,
TX indique des signaux à transmettre, et
RZ indique un codage en code Retour à Zéro ("Return to zero").

Les signaux circulant à l'intérieur du répéteur sont codés en code RZ inverse (Retour à zéro inverse) par opposition aux signaux codés en code RZAMI sur les deux bus connectés. Le transcodage est effectué par les blocs 1 et 2 pour que le répéteur puisse travailler sur des signaux logiques binaires à seulement deux niveaux de tension.

Le code RZ est bien connu de l'homme du métier. Les "0" sont codés à l'aide de paliers de tension nuls, tandis que les "1" sont codés par des impulsions sensiblement rectangulaires, la spécificité de ce code étant que deux "1" qui se suivent sont codés par deux impulsions distinctes et non par une seule impulsion de largeur double. Le code RZ inverse code des "0" et non des "1" à l'aide d'impulsions. Une indication de pourcentage suivant les deux lettres RZ indique le rapport cyclique (durée d'une impulsion sur durée totale d'un bit).

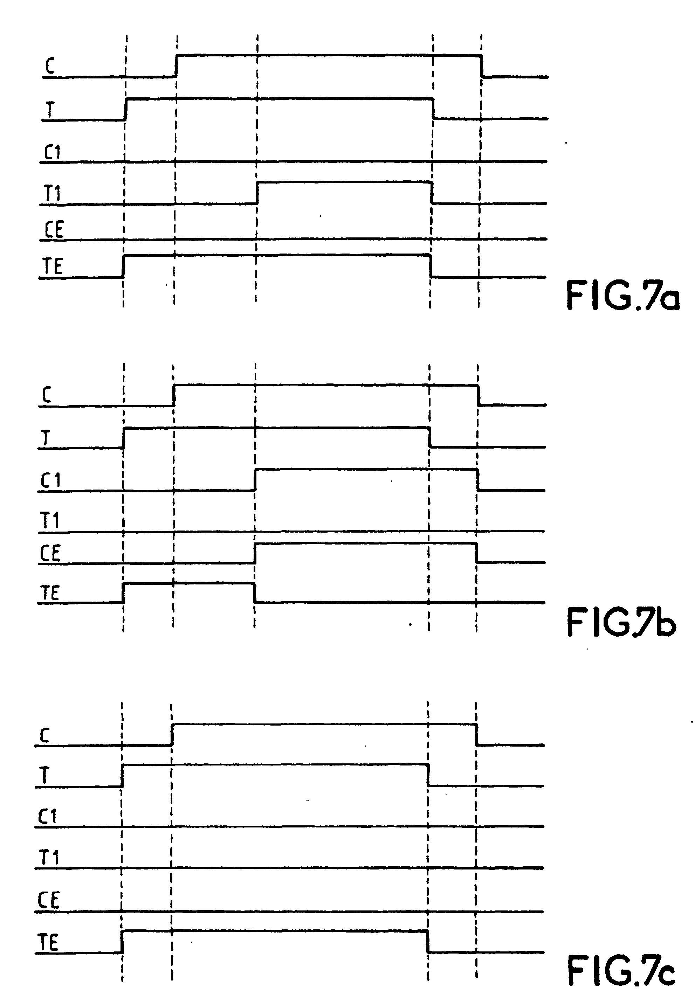

Le code RZAMI code les "1" par des paliers nuls, les "0" étant codés par des impulsions de polarité alternativement positive et négative. La figure 7, abordée plus loin, donne des exemples des deux codes.

Le bloc 1 représente l'interface analogique entre le répéteur et le bus de paires torsadées. Ce bloc est connecté aux deux lignes différentielles TP1 + et TP1- en entrée et en sortie. Le bloc 2 représente l'interface analogique entre le répéteur et le bus coaxial.

Les blocs 1 et 2 réalisent la conversion du code ligne RZAMI en code RZ à logique inverse en réception et effectuent la conversion inverse en émission.

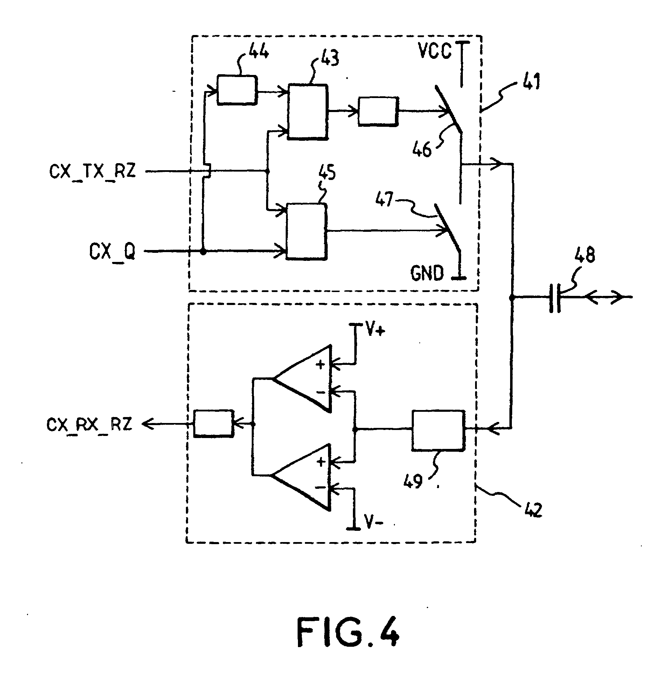

La figure 4 illustre le bloc interface répéteur-coaxial 2 utilisée dans le présent exemple de réalisation.

Ce bloc 2 comporte deux parties distinctes: l'ensemble émetteur 41 et l'ensemble récepteur 42. On décrira tout d'abord l'ensemble récepteur 41, l'ensemble d'émission étant présenté plus loin, cet ensemble faisant appel à des signaux produits par des blocs dont les fonctions n'ont pas encore été abordées.

L'ensemble réception 42 comporte un circuit de clampage 49 de type connu destiné à clamper la tension continue du signal reçu du câble coaxial à une tension qui est par exemple de 2,5 V, à mi-chemin entre VCC et GND. Le signal clampé est comparé à un seuil haut V+ et à un seuil bas V-, destinés à détecter les impulsions positives et négatives. Un premier comparateur fournit un niveau logique bas lorsque le signal clampé dépasse le seuil V+, tandis qu'un second comparateur fournit un niveau logique bas lorsque le signal clampé est inférieur au seuil V-. La comparaison est réalisée par deux comparateurs, dont les sorties sont soumises à un "OU" logique (réalisé par la connexion des sorties des deux comparateurs), cette sortie étant ensuite inversée.

Le signal résultant, CX_RX_RZ est ainsi codé suivant un code RZ inversé.

Le fonctionnement du bloc 1 est similaire à celui du bloc 2, la différence essentielle étant l'utilisation de signaux différentiels sur les deux lignes TP1+ et TP1-. Les fonctions du bloc 2 peuvent être adaptées par l'homme du métier à des signaux différentiels tels que ceux présents sur les conducteurs TP1+ et TP1- des câbles de paires torsadées. Les principes de transcodage restent les mêmes.

En réception, le signal converti par le bloc 1 est référencé TP_RX_RZ.

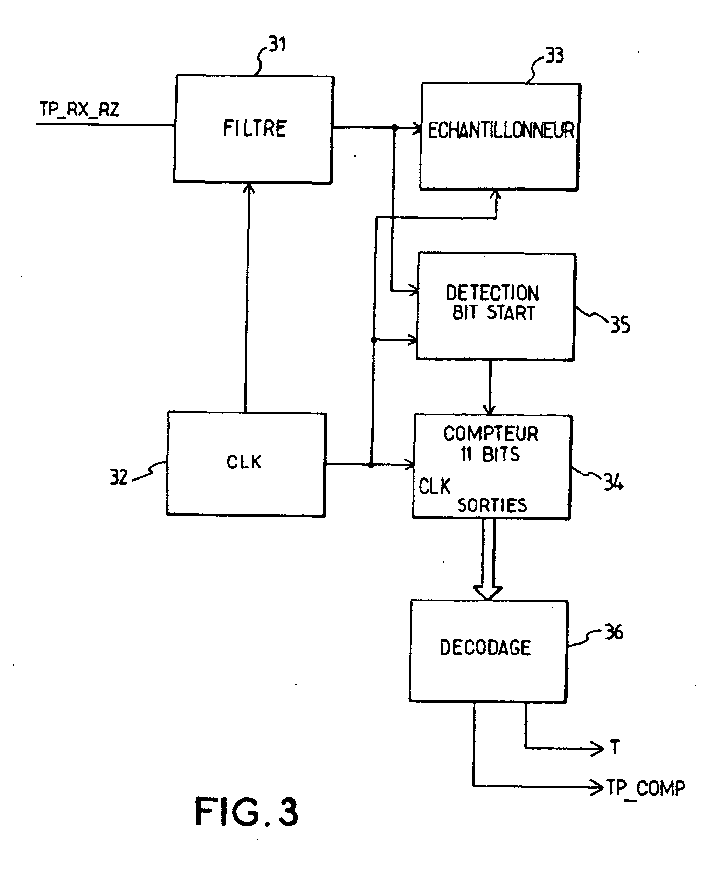

Les signaux TP_RX_RZ et CX_RX_RZ sont traités respectivement par les blocs 3 et 4 de la figure 2. La figure 3 indique de manière plus précise le fonctionnement du bloc 3. Le bloc 4 fonctionne de manière tout à fait similaire.

Le bloc 3 filtre le signal TP_RX_RZ par un filtre 31, qui procède dans un premier temps à l'échantillonnage du signal. Selon le présent exemple de réalisation, le niveau logique que les échantillons représentent n'est reconnu que s'il est confirmé pour au moins trois échantillons consécutifs. Le signal ainsi filtré est rééchantillonné par un échantillonneur 33 au rythme d'une horloge système CLK 32, sensiblement plus rapide que l'horloge bit. L'horloge système possède par exemple un période de 814 ns, ce qui correspond à une fréquence de 1,23 MHz. L'horloge système est alors 128 fois plus rapide que l'horloge bit de 9,6 kHz.

Le signal filtré et rééchantillonné en sortie du bloc 3 est référencé TP.

Le bloc 3 comporte un compteur 34 remis à zéro lorsqu'un bit START est détecté dans le signal reçu. Le compteur 34 est relié à l'horloge système et compte le nombre de périodes d'horloge système depuis la détection de ce bit. Un bit START est présent au début de chaque caractère transmis.

Le bit START est détecté par un détecteur 35 lorsque qu'un niveau logique "0", c'est à dire une impulsion positive, est détectée sur un des bus lorsque celui-ci a été inactif ou lorsqu'un bit STOP a été détecté précédemment. La sortie du détecteur 35 est reliée à l'entrée de remise à zéro du compteur 34.

A partir de la valeur du compteur, un décodeur 36 génère un signal indiquant la présence ou non d'une transmission sur le bus auquel il est associé. Comme cela a été mentionné ci-dessus, un caractère comporte 11 bits, ce qui correspond à 1408 périodes d'horloge système. Le décodeur fournit un signal qui sera à un niveau logique actif tant que l'état du compteur se situe entre 1 et 1408. Le signal fourni par le décodeur du bloc 3 sera référencé T, tandis que celui fourni par le bloc 4 sera référencé C. Bien sûr, les signaux T et C demeurent inactifs tant qu'un bit START n'a pas été reçu.

Le compteur est utilisé pour la génération d'autres signaux dans le dispositif, comme on le verra lors de la description des autres blocs. Pour des questions de clarté, les liaisons entre le compteur et les autres blocs ne figurent pas sur la figure 2.

Le bloc 4 est similaire au bloc 3, mais reçoit le signal CX_RX_RZ et fournit les signaux CX et C, correspondant respectivement aux signaux TP et T.

Le bloc comparateur 5 compare les signaux TP et CX et détecte les différences entre les bits représentés par ces signaux. Le bloc fournit deux signaux: T1 et C1. T1 est activé la première fois où TP est différent de CX et TP est au niveau bas (c'est à dire qu'un "0" a été identifié sur le bus paire torsadée). Il n'est désactivé qu'à la fin du message venant du bus paire torsadée. C1 est activé la première fois que TP est différent de CX et CX est au niveau bas (c'est à dire qu'un "0" a été identifié sur le bus coaxial). Il n'est désactivé qu'à la fin du message venant du bus coaxial.

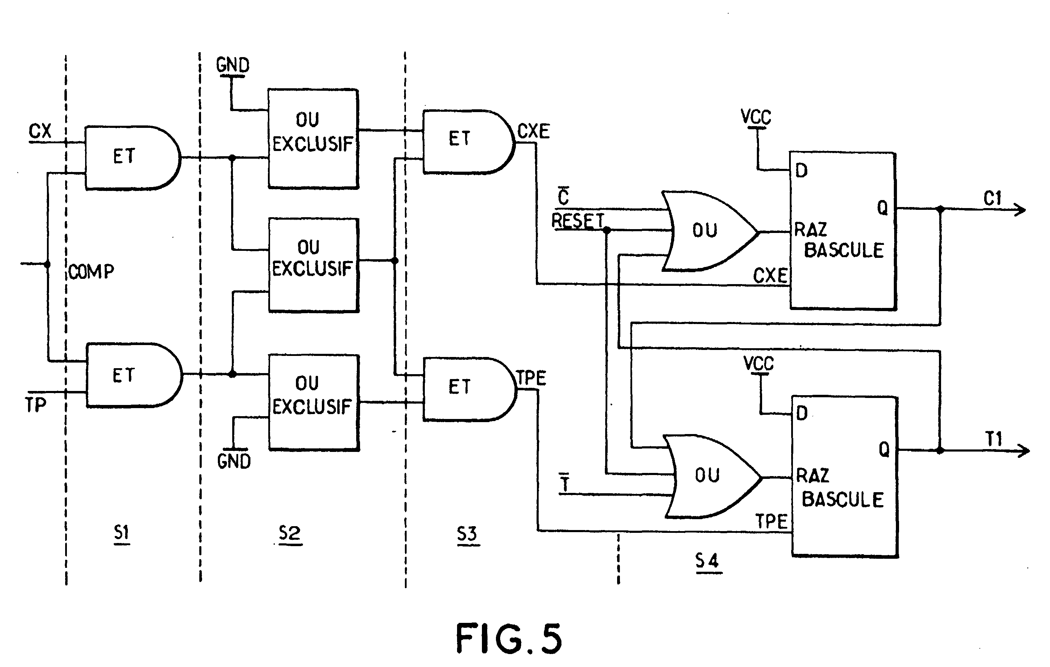

T1 et C1 ne sont jamais actifs en même temps. Un schéma logique du bloc 5 est donné par la figure 5.

La comparaison des signaux CX et TP n'est réalisée que lors de la fenêtre temporelle COMP générée par le bloc 6 dont les caractéristiques seront détaillées plus loin. Il suffit de savoir pour l'instant que la fenêtre de comparaison est générée de manière à permettre une comparaison lorsque les signaux TP et CX peuvent être distingués, en l'occurrence durant une partie de la première moitié d'une période bit lorsque TP et CX sont codés en code RZ 50%. Dans le premier étage du bloc 5 (Etage 51), un "ET" logique est réalisé entre respectivement chacun des signaux TP et CX et le signal COMP.

L'étage 52 réalise alors trois "OU" exclusifs, chacun destiné à tester l'une des conditions suivantes:

"CX est égal à 1"
"TP est égal à 1"
"CX non égal à TP"

Un troisième étage, constitué par deux "ET" à deux entrées chacun combine les résultats de ces tests en fournissant des signaux logiques correspondant aux conditions suivantes:

"CX est égal à 1" ET "TP est non égal à CX"
"TP est égal à 1" ET "TP est non égal à CX"

Les signaux aux sorties des deux "ET" sont désignées respectivement par CXE et TPE sur la figure 5. Chacun des deux signaux commande la mise à l'état logique "1" d'une parmi deux bascules (étage 54), dont les sorties Q respectives correspondent aux signaux C1 et T1.

Une première bascule reçoit sur son entrée d'horloge le signal CXE, sur son entrée D une tension VCC correspondant à un "1" logique. La bascule peut être remise à zéro par un "1" logique sur un des trois signaux suivants: un signal "RESET" générique qui est actif par exemple lors de l'initialisation du circuit, le signal NON(C), C indiquant la présence d'un message sur le bus coaxial, et en dernier lieu le signal T1 en provenance de la seconde bascule. Le signal NON(C) remet à zéro la bascule en fin de message sur le bus coaxial. La remise à zéro par l'intermédiaire de T1 sert à prévenir d'éventuels parasites pouvant faire passer C1 à 1 alors que T1 est actif.

La sortie Q de la première bascule correspond au signal C1.

La seconde bascule reprend les mêmes principes que la première bascule pour générer T1 au lieu de C1.

Le bloc 6 est le bloc qui décide du comportement du répéteur en fonction des signaux présents sur les bus qu'il interconnecte. Le bloc 6 reçoit les signaux TP et T, CX et C ainsi que les signaux T1 et C1.

Le bloc 6 élabore les signaux TE et CE, qui autorisent respectivement la transmission des signaux présents sur le bus de paires torsadées vers le bus coaxial et inversement. Ces signaux commandent les blocs 7 et 8 décrits plus loin.

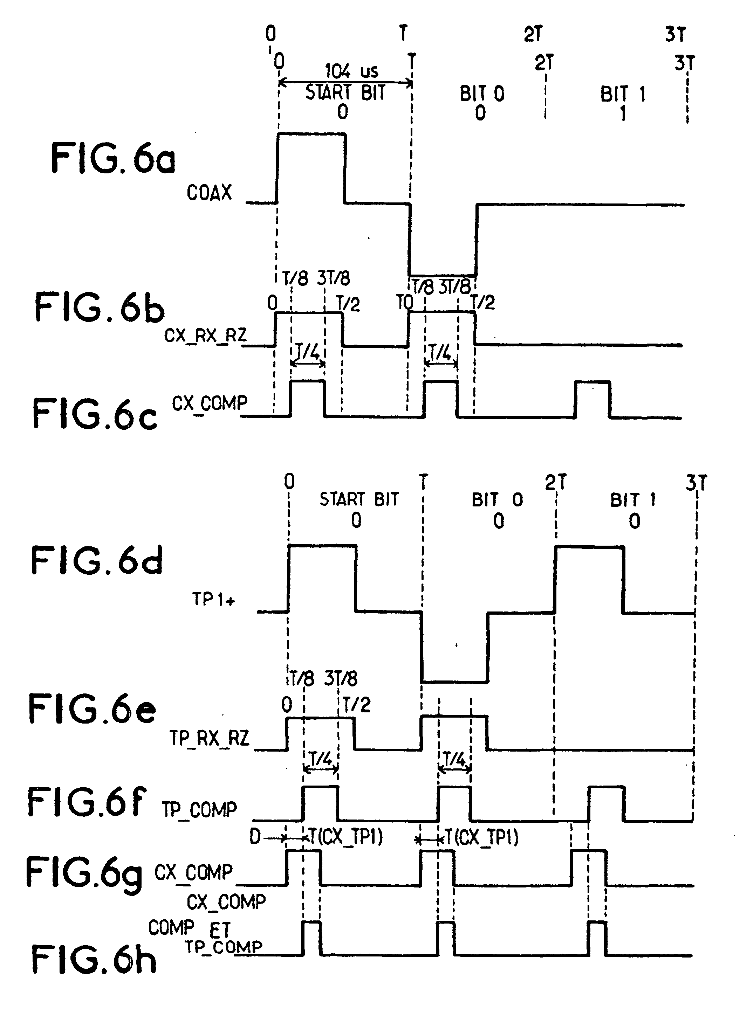

Les figures 6a et 6d donnent un exemple de signaux tels que détectés sur le câble coaxial et TP1+. La séquence de bits donnés correspond à "001" pour le câble coaxial et à "000" pour TP1 +. Les figures 6b et 6e illustrent les signaux CX_RX_RZ et TP_RX_RZ correspondants tels qu'il se présentent à la sortie du bloc 2. Pour la clarté des explications, on supposera dans ce qui suit que les signaux CX et TP sont identiques aux signaux CX_RX_RZ et TP_RX_RZ.

A partir des états des compteurs des blocs 3 et 4, les décodeurs placés en sortie desdits compteurs génèrent pour chaque bit une fenêtre de comparaison de largeur T/4, où T est la période de l'horloge bit. Cette fenêtre de comparaison dure de l'instant T/8 à l'instant 3T/8 de chaque bit, centrée autour du milieu de l'impulsion positive. Les valeurs données sont adaptées pour le code RZ à 50% tel qu'illustré par les figures 6a, 6b, 6d et 6e. Dans ce cas en effet, l'impulsion correspondant à un "0" logique ne dure que T/2. Il est bien entendu possible d'utiliser d'autres largeurs et emplacements des fenêtres de comparaison, dans le cas de ce code à 50%, mais plus particulièrement dans le cas d'un code différent.

Les fenêtres de comparaison résultant des signaux des figures 6b et 6e sont illustrées sur les chronogrammes des figures 6c et 6f. Le bloc 6 réalise un "ET" logique entre ces deux fenêtres. Le résultat de ce "ET", dénommé COMP, est illustré par le chronogramme de la figure 6h. L'avance d'une fenêtre sur l'autre est dénommée D, la largeur de la fenêtre COMP étant de T/4-D. La figure 6g reprend la figure 6c pour montrer de façon plus claire la comparaison réalisée.

Le bloc 6 distingue trois cas différents: A, B et C, correspondant chacun à une fourchette différente pour D.

Dans le cas A, l'avance D est inférieure une période de l'horloge système, période qui, selon le présent exemple, est de 814ns. Un bit START a été détecté sur les deux bus. L'avance étant plus petite que la résolution temporelle du dispositif, il est impossible de dire lequel des deux signaux a été émis le premier.

Dans un premier temps, ni CE ni TE ne sont activés, tant que les signaux des deux cotés du répéteur sont identiques, c'est à dire tant que les signaux C1 et T1 sont à l'état inactif.

Dès que la comparaison des signaux TP et CX montre une différence entre les signaux sur les deux bus, l'un des signaux C1 ou T1 passe à l'état actif. Comme décrit ci-dessus, C1 indique que TP et CX sont différents et que le bit actuel sur CX est un bit "0". Symétriquement, T1 indique que TP et CX sont différents et que TP indique un "0" logique. Le "0" logique ayant priorité sur le "1" logique à cause du protocole d'accès des appareils au réseau, le bloc 6 active le signal TE si T1 est actif et le signal CE si C1 est actif. Dans ce cas, la transmission d'un message sur un premier des deux bus est autorisé vers le second bus. Le message transmis par le répéteur comportant un "0" logique au moment où il est autorisé à passer, le ou les appareils émetteurs sur le second bus sont en mesure de détecter l'arrivée de ce message et s'arrêtent d'émettre. Le début du message ayant été identique sur les deux bus, aucune information du message transmis n'est perdue. Les appareils ayant interrompu leur émission reprendront l'émission de leur message depuis le début de celui-ci. Ces message interrompus ne sont donc pas perdus non plus. Une fois activé, soit le signal TE, soit le signal CE est maintenu actif jusqu'à la fin du message transmis vers le second bus, ce qui garantit la transmission intégrale du message sur ce second bus.

Dans le cas B, la durée D est située entre une période d'horloge système et un quart de période d'horloge bit (T/4), en l'occurrence entre 814ns et 26µs. Comme cela a été précisé ci-dessus, la valeur de 814ns correspond à la résolution temporelle du système. La valeur T/4 est la largeur des fenêtres de comparaison. On peut aisément voir sur la figure 6h que la fenêtre COMP disparaît lorsque la durée D est supérieure à T/4.

Dans le cas B, dans un premier temps, celui des deux messages qui est en avance sur l'autre est transmis: si le bit START de TP est détecté en premier, le bloc 6 active TE, alors que CE demeure inactif, et si le bit START de CX est détecté en premier, CE est activé, alors que TE demeure inactif.

Les signaux TP et CX sont continuellement comparés par le bloc 5. Si le signal C1 est activé, alors le bloc 6 active le signal CE (TE restant inactif), tandis que si le signal T1 est activé, le bloc 6 active le signal TE (CE restant inactif).

Dit d'une autre façon, lorsque deux messages sont émis chacun sur un des deux bus à un intervalle en dessous de T/4, le message émis le premier est transmis vers le bus sur lequel circule le message émis en second. Cette autorisation de transmission est temporaire dans le sens où lorsqu'une disparité apparait entre les messages, priorité est donnée immédiatement au message qui, lors de la détection de la disparité, transmet un "0" logique. Il peut donc y avoir dans certains cas un renversement du sens de la transmission d'un bus vers l'autre. Le fait de renverser le sens de la transmission immédiatement, même à l'intérieur d'un bit, permet à l'appareil émetteur du message transmettant au même moment un "1" logique de détecter le "0" logique transmis par un autre appareil et d'arrêter sa propre transmission en conséquence, conformément au protocole CSMA/CA. Le sens de la transmission est maintenu jusqu'à la fin du message.

Le dernier cas, le cas C, intervient lorsque le délai D entre les bits START est plus grand que T/4. Dans ce cas, le premier message détecté par le dispositif conforme au présent exemple de réalisation a priorité: TE ou CE est activé en conséquence par le bloc 6. Aucun changement de sens de transmission n'est autorisé jusqu'à la fin du message.

Les figures 7a, 7b et 7c représentent des chronogrammes des signaux C, T, C1, T1, CE et TE lorsque le bit START d'un message sur le bus de paires torsadées est détecté le premier. Ceci est visible par le fait que le front montant de T est en avance sur le front montant de C, ce qui a pour conséquence l'activation de TE et donc la transmission vers le bus coaxial.

La figure 7a représente le cas où, une différence ayant été détectée entre le message reçu sur le bus de paires torsadées par le répéteur et le message reçu sur le bus coaxial, le conflit est résolu à l'avantage du message sur le bus de paires torsadées, T1 indiquant que c'est ce message qui comporte un "0" au moment où cette différence est détectée. TE est alors maintenu actif tant que T est actif.

La figure 7b représente le cas où le conflit est résolu en faveur du message sur le bus coaxial. TE est alors désactivé, tandis que CE est activé tant que C demeure actif.

La figure 7c illustre le cas où aucun conflit n'est détecté.

Les figures 7a à 7c permettent aussi de décrire le fonctionnement du système lorsque C est en avance sur T. Etant donné la symétrie du système, il suffit d'intervertir les références T et C.

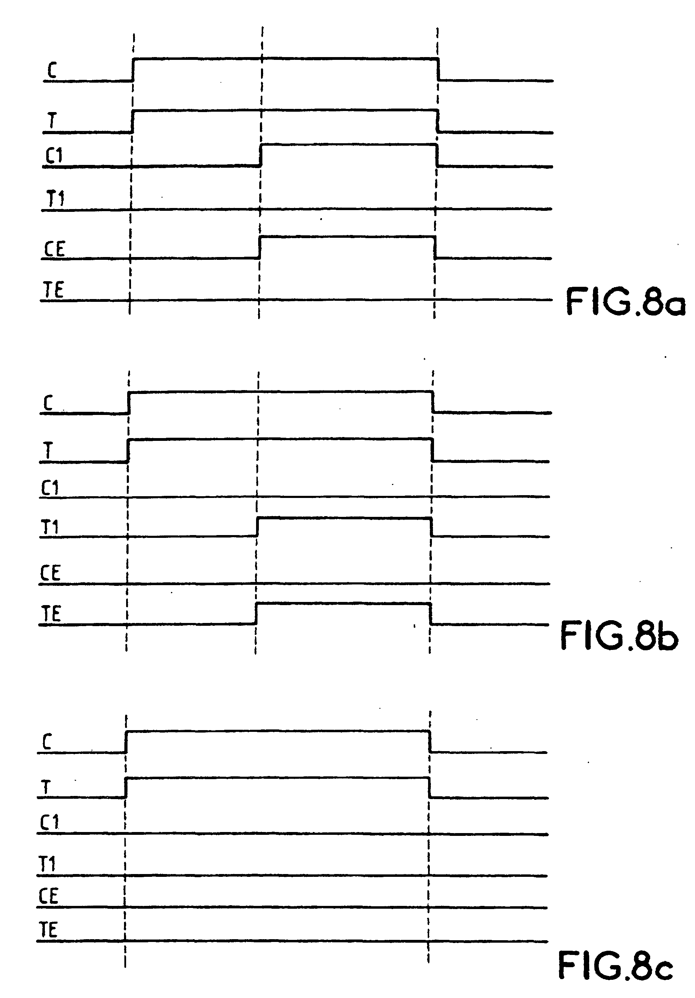

Les figures 8a, 8b et 8c illustrent le cas où le délai entre les deux bits START est inférieur à la durée d'une période de l'horloge système: le circuit considère que les fronts montants des signaux C et T arrivent en même temps. Tant que les signaux C1 et T1 sont inactifs, c'est à dire tant que les messages sont identiques des deux côtés du répéteur, ni TE, ni CE ne sont activés.

Lorsqu'une différence entre les messages est détectée, c'est comme précédemment expliqué c'est au message représentant un "0" logique à qui l'on attribue la priorité. En l'occurrence, lorsque C1 est actif, CE est activé jusqu'à la fin du message en provenance du câble coaxial (figure 8a), tandis que lorsque T1 est actif, c'est TE qui est activé tant que le message en provenance du bus TP n'est pas terminé (figure 8b).

La figure 8c illustre le cas où les messages sont identiques sur les deux bus pendant toute la durée de ces messages.

Les blocs 7 et 8 autorisent ou non le passage des signaux CX ou TP vers les blocs interfaces 2 et 1. L'état passant ou non est déterminé par l'état des signaux CE ou TE. Selon un mode de réalisation particulièrement simple, les blocs 7 et 8 comprennent chacun un "ET" logique à deux entrées. De plus, ces blocs génèrent des signaux CX_Q et TP_Q qui indiquent la parité des impulsions respectivement sur TP et CX: ces signaux vont permettre aux blocs interfaces 2 et 1 d'inverser la polarité des impulsions AMI sur les bus coaxial et paires torsadées. Les signaux CX_Q et TP_Q sont élaborés par exemple par des bascules qui divisent par deux respectivement les signaux CX et TP. Les bascules sont bien évidemment mises à zéro lors de la détection des bits START respectifs, et réagissent sur les fronts montants de CX et TP.

Les signaux CX et TP sont transmis le cas échéant aux blocs 2 et 1, c'est à dire aux interfaces analogiques entre le répéteur et les bus. L'émission des données sur le bus est réalisé, dans le bloc 2, par l'ensemble 42, illustré à la figure 4.

L'ensemble émetteur 42 reçoit le signal CX_TX_RZ, signal logique élaboré par le bloc 7. Cet ensemble reçoit d'autre part du bloc 7 le signal CX_Q. Le signal CX_Q donne la parité des impulsions actuellement transmises sur le bus TP. La connaissance de cette information permet d'une part de coder le premier bit (bit START) avec une impulsion positive, comme requis notamment par la spécification HS, d'autre part de coder les "0" alternativement avec une impulsion positive ou négative.

Symétriquement, le bloc 1 reçoit un signal TP_Q, généré par le bloc 8.

Le signal CX_TX_RZ subit un premier "ET" logique 43 avec le signal de parité inversé par un inverseur 44, et un second "ET" logique 45 avec le signal de parité non-inversé. La sortie du premier "ET" commande à l'état actif la fermeture d'un interrupteur 46 reliant une tension VCC au câble coaxial, tandis que la sortie du second "ET" commande à l'état actif la fermeture d'un interrupteur 47 reliant une tension GND au câble coaxial.

Ainsi, le signal présent sur un bus peut être transmis vers l'autre bus.

Le cable coaxial est relié à l'ensemble 41 tout comme à l'ensemble 42 à travers un condensateur de clampage 48.

Selon une variante de réalisation, le dispositif comporte deux interfaces analogiques de même type.

Selon une autre variante de réalisation, le dispositif comporte des moyens d'isolation galvanique entre les deux bus.

Selon une autre variante de réalisation, le dispositif comporte une alimentation électrique destinée à alimenter au moins un des deux réseaux.

Selon une quatrième variante de réalisation, le dispositif comporte des moyens d'alimenter l'un des bus à partir de l'énergie disponible sur l'autre bus.

L'invention ne se limite pas à un répéteur liant deux bus, mais peut se généraliser à plus de deux bus.

Selon l'exemple de réalisation qui vient d'être décrit, lors d'un conflit entre deux messages, priorité est donnée à celui comportant un "0" logique au moment où les messages commencent à différer. Le fait que le "0" soit prioritaire devant le "1" est dérivé du protocole CSMA/CA. Il est bien évident que l'invention ne se limite pas à ce protocole, et que dans un système employant un autre type de protocole, le "1" peut être prioritaire.

Un avantage de l'invention est que l'ensemble des éléments composant le dispositif (en dehors de certaines parties des interfaces analogiques 1 et 2) peut être implémenté dans un circuit logique programmable sous forme de logique combinatoire et séquentielle. Un microprocesseur ou microcontrôleur n'est pas forcément nécessaire, ce qui réduit d'autant la complexité et le coût du système.

## Revendications

1.  Dispositif d'interfaçage (13) entre au moins deux bus de communication (11, 12), **caractérisé en ce qu'**il comprend
    une interface à double sens (1, 2) pour chacun desdits bus de communication,
    un circuit de comparaison (5) de messages reçus sur lesdits interfaces,
    un circuit de résolution de conflits de priorité (6) entre des messages se chevauchant temporellement, ledit circuit de résolution de conflits (6) autorisant la transmission, à travers le ou lesdits interfaces (1,2), du message prioritaire vers les bus de communication dont ledit message prioritaire n'est pas originaire.

2.  Dispositif selon la revendication précédente, **caractérisé en ce que** chaque interface à double sens est reliée à un circuit d'autorisation d'émission (7,8) lui communicant un message à transmettre sur le bus auquel est connecté ledit interface sous l'action d'un signal d'autorisation (CE, TE) en provenance du circuit de résolution de conflits de priorité (6).

3.  Dispositif selon la revendication 2, **caractérisé en ce que** ledit dispositif d'interfaçage est connecté à un premier bus de communication et à un second bus de communication.

4.  Dispositif selon la revendication 3, **caractérisé en ce que** ledit circuit de résolution de conflit détermine le délai (D) entre le début de deux messages reçus sur les deux bus de communication.

5.  Dispositif selon la revendication 4, **caractérisé en ce que** si ledit délai (D) est inférieur à la résolution temporelle dudit dispositif, alors dans un premier temps aucun signal d'autorisation de transmission n'est généré tant que les deux messages comportent la même information.

6.  Dispositif selon la revendication 4, **caractérisé en ce que** ledit circuit de résolution de conflits (6) crée pour chaque bit d'un message reçu une fenêtre de comparaison (CX_COMP, TP_COMP) de durée inférieure à la période bit (T).

7.  Dispositif selon la revendication 6, **caractérisé en ce que** lorsque ledit délai (D) est inférieur à la durée de ladite fenêtre de comparaison, mais supérieur à la résolution temporelle du dispositif, priorité est donnée dans un premier temps au message ayant débuté en premier, un signal d'autorisation d'émission étant généré par le circuit de résolution de conflits (6) et destiné au circuit d'autorisation d'émission associé au bus de communication dont n'est pas issu le message prioritaire.

**8.** Dispositif selon l'une des revendications 5 ou 7, **caractérisé en ce que** dès que les messages comportent des informations différentes, la priorité est donnée au message comportant un "0" logique, ledit circuit de résolution de conflit générant un signal d'autorisation de transmission (CE, TE) destiné au circuit d'autorisation d'émission associé à celui des deux bus de communication dont le message prioritaire n'est pas issu.

**9.** Dispositif selon l'une des revendications 5 ou 7, **caractérisé en ce que** dès que les messages comportent des informations différentes, la priorité est donnée au message comportant l'information ayant priorité dans le protocole d'accès aux bus des appareils connectés à ces bus, ledit circuit de résolution de conflit générant un signal d'autorisation de transmission (CE, TE) destiné au circuit d'autorisation d'émission associé à celui des deux bus de communication dont le message prioritaire n'est pas issu.

**10.** Dispositif selon la revendication 6, **caractérisé en ce que** lorsque ledit délai (D) est supérieur à la durée de la fenêtre de comparaison, le message prioritaire est le message ayant débuté le premier, ledit circuit de résolution de conflit (6) générant un signal d'autorisation de transmission (CE, TE) destiné au circuit d'autorisation d'émission (7, 8) associé à celui des deux bus de communication (11, 12) dont le message prioritaire n'est pas issu.

**11.** Dispositif selon la revendication 10, **caractérisé en ce que** ledit message prioritaire est transmis en entier vers l'autre bus.

**12.** Dispositif selon l'une des revendications 3 à 11, **caractérisé en ce que** lesdits interfaces (1, 2) sont des interfaces vers un bus coaxial ou un bus à paires torsadées.

**13.** Dispositif selon l'une des revendications précédentes, **caractérisé en ce qu'**il comprend des moyens pour alimenter en énergie un des bus à partir d'un autre bus.

**Patentansprüche**

**1.** Vorrichtung zur Herstellung einer Schnittstelle (13) zwischen mindestens zwei Kommunikationsbussen (11, 12), **dadurch gekennzeichnet, dass** sie Folgendes umfasst:

eine Zweirichtungsschnittstelle (1, 2) für jeden der Kommunikationsbusse,

einen Vergleichsschaltkreis (5) der auf den Schnittstellen empfangenen Meldungen,

einen Schaltkreis (6) zum Lösen von Vorrangskonflikten zwischen den Meldungen, die sich zeitlich überlagern, wobei der Schaltkreis (6) zum Lösen von Konflikten die Übertragung durch die Schnittstelle(n) (1, 2) der vorrangigen Meldung zum Kommunikationsbus erlaubt, aus dem die vorrangige Meldung nicht stammt.

**2.** Vorrichtung nach dem vorhergehenden Anspruch, **dadurch gekennzeichnet, dass** jede Zweirichtungsschnittstelle mit einem Sendegenehmigungsschaltkreis (7, 8) verbunden ist, der ihr unter der Einwirkung eines Genehmigungssignals (CE, TE), das vom Schaltkreis (6) zum Lösen von Vorrangskonflikten stammt, eine auf den Bus zu übertragende Meldung mitteilt, an den die Schnittstelle angeschlossen ist.

**3.** Vorrichtung nach Anspruch 2, **dadurch gekennzeichnet, dass** die Vorrichtung zum Herstellen einer Schnittstelle an einen ersten und einen zweiten Kommunikationsbus angeschlossen ist.

**4.** Vorrichtung nach Anspruch 3, **dadurch gekennzeichnet, dass** der Schaltkreis zum Lösen von Konflikten die Frist (D) zwischen dem Anfang zweier auf den zwei Kommunikationsbussen empfangener Meldungen bestimmt.

**5.** Vorrichtung nach Anspruch 4, **dadurch gekennzeichnet, dass**, wenn die Frist (D) kleiner ist als die zeitliche Auflösung der Vorrichtung, zuerst kein Übertragungsgenehmigungssignal erzeugt wird, solange die beiden Meldungen die gleiche Information enthalten.

6. Vorrichtung nach Anspruch 4, **dadurch gekennzeichnet, dass** der Schaltkreis (6) zum Lösen von Konflikten für jedes Bit einer empfangenen Meldung ein Vergleichsfenster (CX_COMP, TP_COMP) mit einer Dauer anlegt, die kürzer als die Bitperiode (T). ist.

7. Vorrichtung nach Anspruch 6, **dadurch gekennzeichnet, dass**, wenn die Frist (D) geringer ist als die Dauer des Vergleichsfensters jedoch größer als die zeitliche Auflösung der Vorrichtung, zuerst der Meldung Vorrang gegeben wird, die zuerst begonnen hat, wobei ein Sendegenehmigungssignal vom Schaltkreis (6) zur Lösung von Konflikten erzeugt wird und für den zum Kommunikationsbus, aus dem die vorrangige Meldung nicht stammt, gehörenden Sendegenehmigungsschaltkreis bestimmt ist.

8. Vorrichtung nach Anspruch. 5 oder 7, **dadurch gekennzeichnet, dass**, sobald die Meldungen unterschiedliche Informationen enthalten, der Meldung Vorrang gegeben wird, die eine logische "0" enthält, wobei der Schaltkreis zur Lösung von Konflikten ein Übertragungsgenehmigungssignal (CE, TE) erzeugt, das für den Sendegenehmigungsschaltkreis bestimmt ist, der dem der zwei Kommunikationsbusse zugeordnet ist, aus dem die vorrangige Meldung nicht stammt.

9. Vorrichtung nach Anspruch 5 oder 7, **dadurch gekennzeichnet, dass**, sobald die Meldungen unterschiedliche Informationen enthalten, der Meldung Vorrang gegeben wird, die die vorrangige Information im Zugangsprotokoll zu den Bussen der an diese Busse angeschlossenen Geräten enthält, wobei der Schaltkreis zur Lösung von Konflikten ein Übertragungsgenehmigungssignal (CE, TE) erzeugt, das für den Sendegenehmigungsschaltkreis bestimmt ist, der dem der zwei Kommunikationsbusse zugeordnet ist, aus dem die vorrangige Meldung nicht stammt.

10. Vorrichtung nach Anspruch 6, **dadurch gekennzeichnet, dass**, wenn die Frist (D) größer ist als die Dauer des Vergleichsfensters, die vorrangige Meldung die Meldung ist, die zuerst begonnen hat, wobei der Schaltkreis (6) zur Lösung von Konflikten ein Übertragungsgenehmigungssignal (CE, TE) erzeugt, das für den Sendegenehmigungsschaltkreis (7, 8) bestimmt ist, der dem der zwei Kommunikationsbusse (11, 12) zugeordnet ist, aus dem die vorrangige Meldung nicht stammt.

11. Vorrichtung nach Anspruch 10, **dadurch gekennzeichnet, dass** die vorrangige Meldung als Ganzes zum anderen Bus übertragen wird.

12. Vorrichtung nach einem der Ansprüche 3 bis 11, **dadurch gekennzeichnet, dass** die Schnittstellen (1, 2) Schnittstellen zu einem Koaxialbus oder zu einem Bus mit verdrillter Doppelleitung sind.

13. Vorrichtung nach einem der vorhergehenden Ansprüche, **dadurch gekennzeichnet, dass** sie Mittel umfasst, um einen der Busse ausgehend von einem anderen Bus mit Energie zu versorgen.

**Claims**

1. Device for interfacing (13) between at least two communications buses (11, 12), **characterized in that** it comprises
   a two-way interface (1, 2) for each of the said communications buses,
   a circuit for comparison (5) of messages received on the said interfaces,
   a circuit for resolving conflicts of priority (6) between messages overlapping in time, the said conflict-resolution circuit (6) authorizing transmission of the priority message, through the said interface or interfaces (1, 2), to the communications bus from which the said priority message did not originate.

2. Device according to the preceding claim, **characterized in that** each two-way interface is linked to a send authorization circuit (7, 8) communicating to it a message to be transmitted on the bus to which the said interface is connected under the action of an authorization signal (CE, TE) output by the priority-conflict resolution circuit (6).

3. Device according to Claim 2, **characterized in that** the said interfacing device is connected to a first communications bus and to a second communications bus.

4. Device according to Claim 3, **characterized in that** the said conflict resolution circuit determines the time delay (D) between the start of two messages received on the two communications buses.

5. Device according to Claim 4, **characterized in that** if the said time delay (D) is less than the time resolution of the said device, then, in the first place, no transmission authorization signal is generated as long as the two messages include the same information.

6. Device according to Claim 4, **characterized in that** the said conflict resolution circuit (6), for each bit of a message received, creates a comparison window (CX_COMP, TP_COMP) of duration less than the bit period (T).

7. Device according to Claim 6, **characterized in that** when the said time delay (D) is less than the duration of the said comparison window, but greater than the time resolution of the device, priority is given, in the first place, to the message having started first, a send authorization signal being generated by the conflict resolution circuit (6) and intended for the send authorization circuit associated with the communications bus from which the priority message did not come.

8. Device according to one of Claims 5 and 7, **characterized in that**, as soon as the messages include different information, priority is given to the message including a logic "0", the said conflict resolution circuit generating a transmission authorization signal (CE, TE) intended for the send authorization circuit associated with that one of the two communications buses from which the priority message did not come.

9. Device according to one of Claims 5 and 7, **characterized in that**, as soon as the messages include different information, priority is given to the message including the information having priority in the bus access protocol of the apparatuses connected to these buses, the said conflict resolution circuit generating a transmission authorization signal (CE, TE) intended for the send authorization circuit associated with that one of the two communications buses from which the priority message did not come.

10. Device according to Claim 6, **characterized in that**, when the said time delay (D) is greater than the duration of the comparison window, the priority message is the message having started first, the said conflict resolution circuit (6) generating a transmission authorization signal (CE, TE) intended for the send authorization circuit (7, 8) associated with that one of the two communications buses (11, 12) from which the priority message did not come.

11. Device according to Claim 10, **characterized in that** the said priority message is transmitted intact to the other bus.

12. Device according to one of Claims 3 to 11, **characterized in that** the said interfaces (1, 2) are interfaces to a coaxial bus or to a twisted-pair bus.

13. Device according to one of the preceding claims, **characterized in that** it comprises means for supplying one of the buses with energy from another bus.

FIG.1

EP 0 726 666 B1

FIG.2

FIG.3

# FIG.4

FIG.5

EP 0 726 666 B1

FIG.6a

FIG.6b

FIG.6c

FIG.6d

FIG.6e

FIG.6f

FIG.6g

FIG.6h

17

FIG.7a

FIG.7b

FIG.7c

FIG.8a

FIG.8b

FIG.8c